# EUROPEAN PATENT SPECIFICATION

(11) **EP 3 024 908 B1**
(45) Date of publication and mention of the grant of the patent: **16.12.2020**
(21) Application number: 14750643.0
(22) Date of filing: 17.07.2014
(51) Int. Cl.: C09J 163/00, C08L 63/00

(54) **CURABLE COMPOSITIONS**
HÄRTBARE ZUSAMMENSETZUNGEN
COMPOSITIONS DURCISSABLES

(30) Priority: 24.07.2013 US 201361857826 P
(43) Date of publication of application: 01.06.2016
(73) Proprietor: Blue Cube IP LLC, Clayton, Missouri 63105 (US)
(72) Inventor: BALIJEPALLI, Bharati, Midland, MI 48640 (US); THEOFANOUS, Theofanis, Lake Jackson, TX 77566 (US); LOWREY, James R., Pearland, TX 77584 (US)
(74) Representative: Greaves Brewster LLP
(86) International application number: PCT/US2014/046930
(87) International publication number: WO 2015/013084

(56) References cited:
- WO-A1-2012/105071
- JP-B- 3 727 591
- US-A- 6 111 015
- US-A1- 2012 129 980

## Description

### CROSS-REFERENCE TO RELATED APPLICATIONS

This application claims priority from provisional application serial number 61/857,826, filed July 24, 2013.

### FIELD

The present invention relates generally to curable compositions; and more particularly to new, highly toughened, curable epoxy compositions having a balance of beneficial properties such as enhanced flexibility and mechanical strength.

### BACKGROUND

Various curable compositions are known for various end uses. For example, a curable composition may include two components, such as an epoxy resin as a first component and a curing agent as a second component, which can chemically react with each other to form a cured product. There are many possible uses for curable compositions and products obtained by curing those compositions. And, there are a great variety of characteristics that may be desirable for particular applications.

For instance, thermosetting polymers, such as epoxy adhesives (including two-component epoxy adhesives), have long been used as structural adhesives in a wide variety of applications to bond together two or more substrate materials. For example, two-component epoxy adhesives may be used for bonding together wind turbine blade structural components or bonding together automotive structural components. Use of structural adhesives can eliminate or reduce the need for, and cost of, mechanical joining methods, such as fasteners, rivets or welding. In addition, structural adhesives can distribute load stresses over large areas of the bonded structure rather than concentrating stresses at a few mechanically fastened joints in that structure.

Two-component epoxy adhesive compositions typically include one or more epoxy resins that are selectively combined with one or more curing agents or hardeners. Hardeners can include a variety of active hydrogen compounds such as polyamines, polyacids, polymercaptans, polyphenols, polyamides and polyureas. Additional materials and additives may be incorporated into either one of the above two components. The various additives may include, for example, extenders, fillers, reinforcing agents, colorants (e.g., pigments or dyes), organic solvents, plasticizers, flexibilizers, tackifiers, diluents, adhesion promoters, thixotropic agents, rheological agents, and the like.

Two-component epoxy structural adhesives are widely used in the manufacture of structural components because epoxy resins form a versatile glassy network when cured, having good strength, excellent resistance to corrosion and solvents, good adhesion and possess superior heat resistance, dimensional stability, and the like. Unfortunately, the poor toughness of some cured epoxy resin compositions allows the cured resin to fracture under stress.

Conventional two-component epoxy adhesives used in wind blade applications possess high mechanical strength and stiffness but have relatively low flexibility (for example, less than [<] 3 percent [%]). However, as rotor blades are becoming larger and heavier (for example, beyond 45 meters in length) to boost energy yields, there is a demand for tougher, more flexible adhesives that would be better able to withstand increased flex loads and resist cracking.

Generally, "toughness" is the ability of a material to absorb energy and undergo large permanent set without rupture. Certain adhesive systems possess sufficient strength but lack sufficient toughness, thus limiting the usefulness of such adhesive systems. Therefore, there is a need in the adhesive industry for a two-part adhesive composition including an epoxy resin component that surpasses the present levels of strength and toughness.

Heretofore, various means have been used to improve flexibility of epoxy adhesives. For example, U.S. Pat. Nos. 5,278,257; 5,290,857; 5,686,509; 5,334,654; 6,015,865; 5,278,257; 6,884,854; and 6,776,869; and U.S. Patent Application Publication Nos. 2005-0022929, and 2005/007766 describe various compositions and processes in an effort to improve properties of epoxy adhesive materials. However, improved flexibility in epoxy adhesives is generally accompanied by a significant decrease in the tensile modulus, in the strength, and in other performance properties of such epoxy adhesives. This decrease in properties adversely affects the load bearing capability of structural adhesives.

WO/2012/110230A1; U.S. Patent No. 8,278,398; and U.S. Patent No. 7,547,373 describe epoxy resin compositions using core shell rubber particles as toughening agents in combination with additional auxiliary tougheners to achieve a composition having the required impact resistance for use in automotive applications. However, known formulations do not have sufficient strength to be load bearing as used in wind turbine blade applications.

U.S. Patent Application Publication No. 2012/0129980A1 describes the use of graphene carbon particles to improve tensile modulus and strength of core shell rubber toughened epoxy systems. However, the graphene carbon particle fillers are very expensive; and the formulations employing such fillers are not cost effective.

US 6111015 describes curable suspensions of an epoxy resin formulation comprising a) a storage-stable suspension of an epoxy resin and a toughener suspended therein which contains no groups that react with a curable epoxy resin system, b) dicyandiamide, a polycarboxylic acid, a polycarboxylic anhydride, a polyamine, a polyaminoamide, an amino group-containing adduct of an amine and a polyepoxide, a polyol or a catalytically curing hardener, and, as optional components, c) a curing catalyst, conventional fillers or reinforcing materials, which are suitable for use as casting resins, laminating resins or adhesives.

### SUMMARY

One aspect of the present invention includes one or more embodiments of a curable composition comprising (a) at least one epoxy resin; (b) a combination of two or more curing agents; (c) at least one core shell rubber toughening agent; and (d) at least one non-reactive diluent, wherein the non-reactive diluent is adapted for reducing the difference in temperature between Tg1 and Tg2 (delta [Δ] Tg) of the composition, wherein Tg1 is obtained using the half extrapolated tangent method for measuring the change in the heat flow curve generated by a differential scanning calorimetry (DSC) scan from 10 °C to 220 °C at 10 °C per minute, and Tg2 is determined by cooling the same sample from 220 °C to 20 °C followed by a second DSC scan from 10 °C to 180 °C at 10 °C per minute; and wherein ΔTg (Tg2-Tgl) is less than 15 °C as measured by differential scanning calorimetry (DSC).

Also disclosed is a method for reducing the difference in temperature between Tg1 and Tg2 of the curable composition by selecting (a) at least one epoxy resin; (b) a combination of two or more curing agents; (c) at least one core shell rubber toughening agent; and (d) at least one non-reactive diluent, wherein the non-reactive diluent is adapted for reducing the difference in temperature between Tg1 and Tg2 of the composition.

One or more embodiments of a curable composition may have a balance of thermal and mechanical properties such as modulus, elongation, Tg, and peak exotherm.

One or more embodiments of a toughened epoxy resin adhesive curable composition may have a balance of properties. For example, the adhesive industry is in need of a highly toughened adhesive composition which has improved properties including for example increased flexibility (for example, greater than [>] 5 % tensile elongation to break), without loss of tensile strength (for example, > 60 MPa) and/or without loss of modulus (for example, > 3,200 MPa). A toughened adhesive composition would be particularly useful in wind turbine blades applications. The present invention provides a highly toughened two-component epoxy adhesive composition which is particularly useful in wind turbine blades applications.

In one embodiment, the toughened epoxy resin adhesive composition of the present invention has a greatly improved flexibility (for example, > 5 % tensile elongation to break), without loss of tensile strength (for example, > 60 MPa) and/or without loss of stiffness (for example, > 3,200 MPa). For example, the adhesive compositions of the present invention can utilize low cost ingredients to achieve very high toughness of the cured adhesive through a combination of high tensile strength, high modulus, high elongation, appropriate glass transition temperature, and low exothermic heat release.

In another embodiment, the crack resistant nature of the highly toughened epoxy adhesive composition is improved by ensuring that the ultimate glass transition temperature of the adhesive is no more than 20 degrees Celsius (°C) above the cure temperature of the composition.

A process of preparing the above highly toughened epoxy adhesive composition is also disclosed herein.

As one illustration of the curable composition of the present invention, a curable epoxy adhesive curable composition is provided including: (a) one or more epoxy resins; (b) a combination of two or more curing agents; (c) one or more core shell rubber toughening agents; (d) one or more non-reactive diluents such as a poly (alkylene) glycol diluent; (e) optionally, a rheology modifying agent such as one or more particulate fillers; (f) optionally, a supplemental toughening agent such as wollastonite fillers; and (g) optionally, an acrylic ester monomer such as an acrylate compound adapted for reducing the peak exotherm temperature of the curable composition. A balance of desirable properties, as described above, can be achieved by employing the above unique combination of additives.

### DETAILED DESCRIPTION

"Structural adhesive" with reference to an adhesive composition herein means a strong adhesive used to bond load bearing structures and is capable of transferring required loads between adherends.

"Toughened structural adhesive" with reference to an adhesive composition herein means the ability of the structural adhesive to absorb energy without cracking. A toughened material has both high elongation and high tensile strength (i.e., maximization of the area under the stress-strain curve). Toughened adhesives tolerate damage by preventing crack growth and, thus, limiting the damage area. A toughened structural adhesive exhibits enhanced fracture resistance, enhanced impact resistance, and enhanced thermal stress resistance with minimal change in the gross properties of the base thermoset.

"Crack resistant" with reference to an adhesive composition herein means the ability of a material to resist formation and propagation of cracks.

In its broadest scope, the present invention includes a curable adhesive formulation or composition including: (a) at least one epoxy resin; (b) a combination of two or more curing agents; (c) at least one core shell rubber toughening agent; and (d) at least one non-reactive diluent adapted for reducing the difference in temperature between Tg1 and Tg2, wherein Tg 1 is obtained using the half extrapolated tangent method for measuring the change in the heat flow curve generated by a differential scanning calorimetry (DSC) scan from 10 °C to 220 °C at 10 °C per minute, and Tg2 is determined by cooling the same sample from 220 °C to 20 °C followed by a second DSC scan from 10 °C to 180 °C at 10 °C per minute; and wherein ΔTg (Tg2-Tg1) is less than 15 °C as measured by differential scanning calorimetry (DSC). Other optional components/additives can be included in the above curable composition such as for example a (e) at least one rheology modifier; (f) at least one non-core shell rubber supplemental toughening agent such as a wollastonite filler material; and (g) at least one acrylic ester monomer; and other additives that do not adversely affect the final cured product such as an adhesive product made from the curable composition.

The curable epoxy composition or formulation of the present invention includes at least one epoxy compound; and the epoxy compound may include one epoxy or may include a combination of two or more epoxy compounds. The epoxy compounds useful in the present invention are those compounds containing at least one vicinal epoxy group and may include a wide variety of epoxy compounds. For example, the epoxy compound may be saturated or unsaturated, aliphatic, cycloaliphatic, aromatic or heterocyclic and may be substituted. The epoxy compound may be monomeric or polymeric.

For example, one embodiment of the epoxy compound used in the curable composition of the present invention may be for example a single epoxy compound used alone; or a combination of two or more other epoxy compounds known in the art such as any of the epoxy compounds described in Lee, H. and Neville, K., Handbook of Epoxy Resins, McGraw-Hill Book Company, New York, 1967, Chapter 2, pages 2-1 to 2-27. In a preferred embodiment, the epoxy compound may include for example epoxy resins based on reaction products of polyfunctional alcohols, phenols, cycloaliphatic carboxylic acids, aromatic amines, or aminophenols with epichlorohydrin. A few non-limiting embodiments include, for example, bisphenol A diglycidyl ether, bisphenol F diglycidyl ether, resorcinol diglycidyl ether, and triglycidyl ethers of para-aminophenols. Other suitable epoxy resins known in the art include for example reaction products of epichlorohydrin with o-cresol novolacs, hydrocarbon novolacs, and, phenol novolacs. The epoxy compound may also be selected from commercially available epoxy resin products such as for example, D.E.R.® 330, D.E.R. 331, D.E.R. 332, D.E.R. 354, D.E.R. 383, D.E.R. 580, D.E.N. ® 425, D.E.N. 431, D.E.N. 438, D.E.R. 736, or D.E.R. 732 epoxy resins available from The Dow Chemical Company; and mixtures thereof.

In general, at least one of the epoxy resins used in the composition of the present invention, has a viscosity of between 1 mPa-s and 100,000 mPa-s in one embodiment, between 5 mPa-s and 50,000 mPa-s in another embodiment, between 10 mPa-s and 10,000 mPa-s in still another embodiment, and between 10 mPa-s and 1,000 mPa-s in yet another embodiment, at ambient temperature (about 20 °C to 25 °C).

The concentration of the epoxy resin used in the present invention may range generally from 20 weight percent (wt %) to 70 wt % in one embodiment, from 30 wt % to 65 wt % in another embodiment, and from 35 wt % to 60 wt % in still another embodiment, based on the total weight of the composition.

In another embodiment, the composition may have the following stoichiometric ratios of total epoxy resin to total hardener such as for example generally in the range of from 1 to 0.8 (epoxy:hardener) in one embodiment, from 1 to 1.2 (epoxy:hardener) in another embodiment, and from about 1 to about 1 (epoxy:hardener) in still another embodiment.

As aforementioned, the curable epoxy composition of the present invention may include two or more epoxy compounds in combination. If a second epoxy compound is used, the second epoxy compound may include at least one epoxy compound selected from any of the epoxy compounds described above with reference to the first epoxy compound. In one preferred embodiment the second epoxy compound may be a diluent as discussed herein below.

The curable epoxy composition of the present invention includes a combination of two or more hardener compounds. A first hardener compound of the curable resin composition useful in the present invention may be selected from any known hardeners in the art. The first hardener compound may be blended with epoxy resins described above.

For example, the first hardener (also referred to as a curing agent or crosslinking agent) useful in the present invention may be any compound having an active group being reactive with the reactive epoxy group of the epoxy resin. The chemistry of such curing agents is described in the previously referenced books on epoxy resins. The curing agent useful in the present invention includes nitrogen-containing compounds such as amines and their derivatives; oxygen-containing compounds such as carboxylic acid terminated polyesters, anhydrides, phenol-formaldehyde resins, amino-formaldehyde resins, phenol, bisphenol A and cresol novolacs, phenolic-terminated epoxy resins; sulfur-containing compounds such as polysulfides, polymercaptans; and catalytic curing agents such tertiary amines, Lewis acids, Lewis bases and combinations of two or more of the above curing agents.

Practically, polyamines, dicyandiamide, diaminodiphenylsulfone and their isomers, aminobenzoates, various acid anhydrides, phenol-novolac resins and cresol-novolac resins, for example, may be used in the present invention, but the present invention is not restricted to the use of these compounds.

The hardeners of choice may depend on the application requirements. Generally, the hardener useful in the present invention may be selected from, for example, but are not limited to, dicyandiamide, substituted guanidines, phenolic, amino, benzoxazine, anhydrides, amido amines, polyamides, polyamines, aromatic amines, polyoxypropylenediamines, carbodiimides, polyesters, polyisocyanates, polymercaptans, urea formaldehyde and melamine formaldehyde resins, and mixtures thereof.

In one embodiment, the at least one first hardener may include one or more of aliphatic amines such as ethanolamine, ethylenediamine, diethylenetriamine (DETA), triethyleneaminetetramine (TETA), isophorone diamine (IPDA),1-(o-tolyl)-biguanide, dicyandiamide, amine-terminated polyols, aromatic amines such as methylenedianiline (MDA), toluenediamine (TDA), diethyltoluenediamine (DETDA), Versamid (trademark of Cognis) hardeners, Genamid (trademark of Cognis) hardeners, Jeffamine (trademark of Huntsman) hardeners, diaminodiphenylsulfone (DADS), polyphenols such as bisphenol A, bisphenol F, 1,1-bis(4-hydroxyphenyl)-ethane, hydroquinone, resorcinol, catechol, tetrabromobisphenol A, novolacs such as phenol novolac, bisphenol A novolac, hydroquinone novolac, resorcinol novolac, naphthol novolac, mercaptans such as mercaptan-terminated polysulfide polymers, Capcure (trademark of Cognis) hardeners, anhydrides such as phthalic anhydride, trimellitic anhydride, nadic methyl anhydride, methyl tetrahydrophthalic anhydride, methyl hexahydrophthalic anhydride; and mixtures thereof.

For the above embodiments, the hardener is used generally within a range of from 5 wt % to 50 wt % in one embodiment, within a range of from 10 wt % to 35 wt % in another embodiment, and within a range of 15 wt % to 30 wt % in still another embodiment, based on the total weight of the composition.

As aforementioned, the curable epoxy composition of the present invention includes two or more hardeners in combination. The second hardener may include a hardener selected from any of the hardeners described above with regard to the first hardener; and the second hardener compound can include at least one different hardener of any of the hardeners described above with regard to the first hardener.

For example, the first hardener and second hardener may include one or more different amine curing agents. In one preferred embodiment, the first and second hardeners include a combination of polyamidoamine, isophorone diamine, and polyoxypropylenediamine.

The structural adhesive of the invention contains at least one core-shell rubber. The core-shell rubber is a particulate material having a rubbery core. The rubbery core preferably has a Tg of less than -20 °C, more preferably less than -50 °C and even more preferably less than -70 °C. The Tg of the rubbery core may be well below - 100 °C. The core-shell rubber also has at least one shell portion that preferably has a Tg of at least 50 °C. By "core", herein it is meant an internal portion of the core-shell rubber. The core may form the center of the core-shell particle, or an internal shell or domain of the core-shell rubber. The "shell" of the core-shell particle is a portion of the core-shell rubber that is exterior to the rubbery core. The shell portion (or portions) typically forms the outermost portion of the core-shell rubber particle. The shell material is preferably grafted onto the core or is cross-linked. The rubbery core may constitute from 50 % to 95 %, and preferably from 60 % to 90 %, of the weight of the core-shell rubber particle.

The core of the core-shell rubber may be a polymer or copolymer of a conjugated diene such as butadiene, or a lower alkyl acrylate such as n-butyl-, ethyl-, isobutyl- or 2-ethylhexylacrylate. The core polymer may in addition contain up to 20 % by weight of other copolymerized monounsaturated monomers such as styrene, vinyl acetate, vinyl chloride, methyl methacrylate, and the like. The core polymer is optionally cross-linked. The core polymer optionally contains up to 5 % by weight of a copolymerized graft-linking monomer having two or more sites of unsaturation of unequal reactivity, such as diallyl maleate, monoallyl fumarate, allyl methacrylate, and the like, at least one of the reactive sites being non-conjugated. The core polymer may also be a silicone rubber. These materials often have glass transition temperatures below -100° C.

The shell polymer, which is optionally chemically grafted or cross-linked to the rubber core, is preferably polymerized from at least one lower alkyl methacrylate such as methyl-, ethyl- or t-butyl methacrylate. Homopolymers of such methacrylate monomers can be used. Further, up to 40 % by weight of the shell polymer can be formed from other monovinylidene monomers such as styrene, vinyl acetate, vinyl chloride, methyl acrylate, ethyl acrylate, butyl acrylate, and the like. The molecular weight of the grafted shell polymer is generally between 20,000 and 500,000.

A preferred type of core-shell rubber has reactive groups in the shell polymer which can react with an epoxy resin or an epoxy resin hardener. Glycidyl groups such as are provided by monomers such as glycidyl methacrylate are suitable. A particularly preferred type of core-shell rubber is of the type described in EP1632533 A1. Core-shell rubber particles as described in EP1632533A1 include a cross-linked rubber core, in most cases being a cross-linked copolymer of butadiene, and a shell which is preferably a copolymer of styrene, methyl methacrylate, glycidyl methacrylate and optionally acrylonitrile.

Some examples of core shell rubbers include the "JSR SX" series of carboxylated polystyrene/polydivinylbenzene produced by JSR Corporation; "Kureha Paraloid" EXL-2655 (produced by Kureha Chemical Industry Co., Ltd.), which is a butadiene alkyl methacrylate styrene copolymer; "Staftloid" AC-3355 and TR-2122 (both produced by Takeda Chemical Industries, Ltd.), each of which are acrylate methacrylate copolymers; and "PARALOID" EXL-2300 and EXL-3387 (both produced by Rohm & Haas), each of which are butyl acrylate methyl methacrylate copolymers.

The core-shell rubber is preferably dispersed in a polymer or an epoxy resin, also as described in EP 1 632 533 A1. Preferred core-shell rubber dispersions include those sold by The Dow Chemical Company under the designation FORTEGRA™, including FORTEGRA™ 301 and those sold by Kaneka Corporation under the designation Kaneka Kane Ace, including Kaneka Kane Ace MX 156 and Kaneka Kane Ace MX 120. These products contain the core-shell rubber particles pre-dispersed in an epoxy resin. The epoxy resin contained in those products will form all or part of the non-rubber-modified epoxy resin component of the structural adhesive of the invention.

The core-shell rubber particles can constitute from 1 wt % to 15 wt % of the structural adhesive. The core-shell rubber particles preferably constitute at least 5 wt % of the structural adhesive. The core-shell rubber particles preferably constitute no more than 12 wt %, and more preferably no more than 8 wt % of the structural adhesive.

The epoxy resin curable composition of the present invention includes at least one non-reactive diluent in an amount sufficient to control the ultimate glass transition temperature of the cured composition and additionally to provide the curable composition with a viscosity for readily processing the composition.

The inter-relationship of thermal properties and mechanical performance of a thermoset is well known. For most applications, systems are best formulated to provide ultimate glass transition temperatures (Tg2) that are higher than the maximum expected service temperature. This is done in order to maintain stiffness, strength and surface hardness. However, for most applications, and more particularly in the manufacture of wind turbine blades, the cure temperature and time employed for curing may not be sufficient to allow the adhesive composition to reach the maximum glass transition temperature (Tg2).

The observed glass transition temperature after an applied cure schedule is termed "Tg1"; and the ΔTg is a value indicating the difference between Tg1 and Tg2 (ΔTg = Tg2 - Tg1). ΔTg may be used as a measure of the degree of cure of a curable composition. A large value of ΔTg indicates the presence of a large amount of un-reacted components in a curable composition; and therefore, indicates that a cured composition such as an adhesive composition has degraded properties such as heat resistance and dimensional stability. A higher than necessary Tg2 further tends to decrease the toughness of a cured material (thermoset product) due to under-curing and poor property development, ultimately leading to brittle failures of the thermoset product. The glass transition temperature of the present invention can be controlled by the addition of a non-reactive diluent.

The adhesive composition has a ΔTg of less than 15 °C as measured by differential scanning calorimetry (DSC). Preferably, the ΔTg is less than 10 °C.

Advantageously, diluents have other benefits and can be used for example to vary other cure characteristics, such as to extend pot life, improve adhesion properties, and adjust the viscosity of curable compositions.

A variety of non-reactive diluents are useful in the present composition to adjust the glass transition temperature of the cured composition. Examples include polyglycols, benzyl alcohol, nonyl phenol, furfuryl alcohol, dibutylphthalate, dioctylphthalate, pine oil, castor oil, soybean oil, or mixtures thereof. In a preferred embodiment the diluent may be chosen from the class of poly(alkylene) glycols that consist of random, block or alternating arrangements of ethylene oxide, propylene oxide and butylene oxide. The molecular weight of these polyols may vary from 400 to 6000 in molecular weight. Examples include polyethylene glycol and polypropylene glycol.

The curable epoxy adhesive composition of the present invention may include two or more diluents in combination. If at least a second diluent compound is used, the second diluent may include a diluent selected from any of the diluents described above with regard to the first diluent and can be different from the first diluent. The second diluent may alternatively be an epoxy resin. In a preferred embodiment the second diluent may be a polymeric glycidyl ether. The polymeric glycidyl ether can be formed from units which include polyalkylene oxide reacted with epichlorohydrin to form glycidyl ethers. The glycidyl ether can be selected from the group consisting of allyl glycidyl ethers, diglycidyl ethers, phenyl glycidyl ethers, alkyl glycidyl ethers, and combinations thereof. Sometimes, polymeric glycidyl ethers can be formed by a reaction of mono- to poly- hydroxyl compounds with alkylene oxides and a conversion of the polyetherpolyol reaction product into a glycidyl ether with epichlorohydrin and subsequent treatment of the former intermediate with aqueous sodium hydroxide. Additionally, cycloaliphatic epoxy resins can be used as the diluent.

The present invention may also use polyglycidyl ethers that may be derived from aliphatic polyalcohols, such as ethylene glycol, diethylene glycol, triethylene glycol, 1,2-propylene glycol, 1,4-butylene glycol, triethylene glycol, 1,5-pentanediol, 1,6-hexanediol, cyclohexane dimethanol, trimethylolpropane, or mixtures thereof.

Examples of the second diluent include mono- and diglycidyl ethers of aliphatic alcohols and polyether glycols such as C2-C24 alkylene glycols and poly(ethylene oxide) or poly(propylene oxide) glycols, and mixtures thereof. Commercially available diglycidyl ethers of alcohols that are useful include for example 1,6-Hexanediol diglycidylether, 1,4-butanediol diglycidylether, and mixtures thereof.

The amount of diluent used in the resin composition generally can be within a range of from 1 wt % to 50 wt % in one embodiment, within a range of from 2 wt % to 25 wt % in another embodiment, and within a range of from 3 wt % to 20 wt % in still another embodiment, based on the total weight of the resin component. For the embodiments disclosed herein, the first diluent may be blended with the epoxy resin component, or the first diluent may be blended with the hardener component when preparing the curable epoxy resin composition.

The curable epoxy adhesive composition of the present invention may optionally include a rheology modifying agent or a combination of two or more rheology modifying agent compounds that are used to determine or affect the rheology of the curable composition. In one preferred embodiment, the rheology modifying agent can be a filler material, a thixotropic compound, or other compounds that can be used to modify the rheology of the curable composition. For example, the filler material may include one or more types of thixotropic agents or rheology control agents. In one preferred embodiment of the present invention, the curable composition contains at least one fumed silica as the rheology modifying agent.

Fumed silica thixotropic agents used in the present invention may be selected from fumed silica known in the art; or may be selected from commercially available fumed silica from several commercial sources, including the fumed silica products sold under the CAB-O-SIL (trademark of Cabot Corporation), fumed silica products sold under the HDK (trademark of Wacker), and the fumed silica products sold under the AEROSIL (trademark of Degussa). Both hydrophilic and hydrophobic fumed silicas are useful in the present invention. Hydrophobic fumed silica is fumed silica that has been reacted with a compound (usually an organosilicon compound such as dimethyldichlorosilane, trimethoxyoctylsilane, polydimethylsiloxane or hexamethyldisilazane) to replace at least a portion of the hydroxyl groups on the surface of the fumed silica with other groups such as methyl groups.

In one embodiment of the present invention, the fumed silica has a BET surface area in the range of from 80 m² /g to 300 m² /g; and/or a carbon content of from 0.5 wt % to 7 wt %. Methods of preparing hydrophobic fumed silicas include, for example, the methods described in U.S. Patent Nos. 2,739,075 and 2,786,042.

Other fillers that can be used as the rheology modifier in the present invention composition include for example thixotropes such as talc, asbestos, colloidal silica, modified bentonite, hydrated magnesium aluminum silicates, nanoclays, or other organic or inorganic particulate filler, or mixtures thereof. The rheology modifying filler may be either added into the curable composition in its end state or may be formed in the curable composition *in-situ.* The rheology modifying filler can also be optionally treated to improve filler and polymer interaction.

Filler loadings of the rheology modifying filler material useful in the present invention may vary. Generally, the concentration of the rheology modifying filler used in the curable composition may include from 1 wt % to 12 wt % in one embodiment, from 2 wt % to 10 wt % in another embodiment; and from 4 wt % to 8 wt % in still another embodiment; based on the total weight of the composition.

Other chemical thixotropic agents that can be useful in the present invention, similar to the above fume silica, may include for example commercial products such as BYK®-R 605 commercially available from BYK Additives & Instruments. Other liquid rheology additive that are commonly used in plastic applications such as vinyl ester and epoxy resins, unsaturated polyester resins, and gel coats to reinforce the rheological effectiveness of fumed silica can also be used. The liquid rheology additive can advantageously for example facilitate silica incorporation when used with a silica filler, prevent separation of fillers including silica, and increase/stabilize thixotropic behavior.

Generally, the concentration of the liquid rheology modifying present in the curable composition may be within the concentration ranges similar to the filler loadings above.

The curable epoxy adhesive composition of the present invention may optionally include at least a supplemental toughening agent or a combination of two or more supplemental toughening agent compounds that are advantageously used in combination with the core-shell rubber toughening agent to further improve the mechanical strength and toughness of the cured thermoset resulting from the curable composition. For example, the supplemental toughening agent may include FORTERGRA™ 201 and FORTEGRA™ 100 (trademark of The Dow Chemical Company) commercially available from The Dow Chemical Company, and mixtures thereof.

In one preferred embodiment, the supplemental toughening agent may be generally a filler material. For example, filler materials useful as a supplemental toughening agent in the curable composition may include for example functional or non-functional fillers such as for example, wollastonite, calcium carbonate, alumina, aluminum trihydroxide, aluminum hydroxide oxide, boron nitride, silicon carbide, mica, aluminum powder, zinc oxide, silver, graphite, aluminum nitride, aluminum oxide, mullite, gold, carbon, carbon nanotubes, graphene, glass fibers/sheets/beads, carbon fibers, or other organic or inorganic particulate filler, or mixtures thereof. The filler may be either added into the curable composition in its end state or the filler may be formed in the curable composition *in-situ.* The filler can also be optionally treated to improve filler and polymer interaction.

Filler loadings of the supplemental toughening agent filler useful in the present invention may vary. Generally, the concentration of the supplemental toughener filler used in the composition may include from 1 wt % to 10 wt % in one embodiment, from 2 wt % to 8 wt % in still another embodiment, from 3 wt % to 5 wt % in still another embodiment, based on the total weight of the composition.

The supplemental toughener filler may be combined with the two or more other different filler materials to have a synergistic effect on properties such as for example coefficient of thermal expansion (CTE), Young's modulus, tensile strength, and/or heat conductivity.

Other optional components may be used in the present invention including, for example, a compound that can be added to the composition to control the exothermic heat release during cure. The curable epoxy adhesive composition of the present invention may optionally include an acrylic ester monomer or a combination of two or more acrylic ester monomer compounds that are advantageously used in the curable composition to facilitate minimizing the exothermic heat release during the curing of the cured thermoset resulting from the curable composition.

The curable resin composition of the present invention may include at least one additive to facilitate minimization of exothermic heat release during the curing reaction. The exotherm controlling additives useful as an optional component in the composition of the present invention may include diluents both non-reactive and reactive. Examples of non-reactive diluents that can reduce exotherm include polyols such as polypropylene oxide-based polyether polyols, seed oil-based polyols, polyester polyols, polypropylene glycols, MPEGs, hydroxyl-containing seed oils and the like, and copolymer polyols such as IP 5500, IP 950, IP 950-S4 and Specflex™ 701 (trademark of The Dow Chemical Company) available from The Dow Chemical Company, and any combination thereof. Examples of diluents with reactive functional groups include acrylate-functional monomers. Some non-limiting examples of the exotherm controlling additive of the present invention may include, for example, 1,6-hexanediol diacrylate, trimethylolpropane triacrylate, and 1,4-butanediol and any combination thereof.

The concentration of the optional exotherm controlling additives used in the present invention may range generally from 0 wt % to 5 wt % in one embodiment, and from 1 wt % to 4 wt % in another embodiment, based on the weight of all the components in the composition.

Optionally, a catalyst can be added to the curable composition to speed up the rate of cure. The curable resin composition of the present invention may include at least one catalyst to facilitate the reaction of the epoxy resin compound with the curing agent. The catalyst useful as an optional component in the composition of the present invention may include catalysts known in the art, such as for example, catalyst compounds containing amine, phosphine, heterocyclic nitrogen, ammonium, phosphonium, arsonium, sulfonium moieties, and any combination thereof. Some non-limiting examples of the catalyst of the present invention may include, for example, ethyltriphenylphosphonium; benzyltrimethylammonium chloride; heterocyclic nitrogen-containing catalysts described in U.S. Patent No. 4,925,901; imidazoles; triethylamine; and any combination thereof.

In one embodiment, the catalyst may include tertiary amines such as, for example, triethylamine, tripropylamine, tributylamine, 2-methylimidazole, benzyldimethylamine, tris (2,4,6-dimethylaminomethyl)phenol, mixtures thereof and the like.

In another embodiment, the curing catalyst may include for example imidazole derivatives such as 2-ethyl-4-methyl imidazole; tertiary amines; organic metallic salts; and cationic photoinitiators, for example, diaryliodonium salts such as Irgacure™ 250 available from Ciba-Geigy or triarylsulfonium salts such as Cyracure™ 6992 (trademark of The Dow Chemical Company) available from The Dow Chemical Company.

The curing catalyst may be added to the epoxy resin composition component or alternatively, the curing catalyst may be blended into the curable composition.

The concentration of the curing catalyst used in the present invention may be less than 5 wt %; and generally from 0 wt % to 5 wt % in one embodiment, and from 0.01 wt % to 3 wt % in another embodiment, based on the total weight of the curable composition. Lower concentrations of catalyst typically do not provide sufficient catalytic effect, resulting in too slow reactivity of the formulations. Higher concentrations of catalyst typically result in too high reactivity of the formulations.

The curable composition of the present invention can include optional components/additives/compounds including for example compounds that are normally used in resin formulations known to those skilled in the art for preparing curable compositions and thermosets. For example, the optional components useful in the composition may include compounds that enhance the application properties (e.g. surface tension modifiers or flow aids) of the composition, reliability properties (e.g. adhesion promoters), dyes, pigments, fire retardants; and mixtures thereof.

Generally, the concentration of the one or more optional components, when used in the present invention, may be for example, 0 wt % to 10 wt % in one embodiment, from 0.01 wt % to 8 wt % in another embodiment; and from 0.1 wt % to 5 wt % in still another embodiment.

The process for preparing the curable composition of the present invention includes admixing (a) at least one epoxy resin; (b) a combination of two or more curing agents; (c) at least one core shell rubber toughening agent; and (d) at least one non-reactive diluent adapted for reducing the difference in temperature between Tg 1 and Tg2, wherein Tg 1 is obtained using the half extrapolated tangent method for measuring the change in the heat flow curve generated by a differential scanning calorimetry (DSC) scan from 10 °C to 220 °C at 10 °C per minute, and Tg2 is determined by cooling the same sample from 220 °C to 20 °C followed by a second DSC scan from 10 °C to 180 °C at 10 °C per minute; and wherein ΔTg (Tg2-Tgl) is less than 15 °C as measured by differential scanning calorimetry (DSC); optionally, at least two or more fillers; and optionally, any other optional compound such as at least one cure catalyst or optionally any other desirable additives or other optional ingredients described above as needed.

The curable composition of the present invention is a two-component system comprising (A) a resin composition component; and (B) a hardener composition component, wherein the fillers and other additives can be added into (i) the first component
(A), (ii) the second component (B), or (iii) both the first and second components (A) and
(B), respectively.

The resin part and curing agent part are stored separately. The two parts are homogeneously mixed to form the curable composition shortly before use. The mixed, curable composition is typically applied at about room temperature to one or both of the substrates to be joined. The substrates are contacted such that the adhesive is located between and in contact with the substrates to be bonded together. The contacted parts are held in relative position while the composition cures.

In one embodiment the disclosed resin part and curing agent part are each components of a two part adhesive package. Each part is chemically separated and packaged as convenient for use. The resin part and curing agent part are typically homogeneously mixed and dispensed onto a substrate surface. Mixing can be manual, mechanical or a combination thereof. Mixers can include, but are not limited to, a planetary mixer, dispensing the two components from separate component cartridges into a common conduit having a static mix head, where the components are mixed as they pass through the conduit, and/or other types of mixers. The preparation of the curable formulation of the present invention, and/or any of the steps thereof, may be a batch or a continuous process. The mixing equipment used in the process may be any vessel and ancillary equipment well known to those skilled in the art. Automated application equipment for mixing and dispensing a two part adhesive composition is known.

All the compounds of the curable formulation are typically mixed and dispersed at a temperature enabling the preparation of an effective curable epoxy resin composition having the desired balance of properties for a particular application, particularly the coating application described herein.

As one preferred illustration of the present invention, a curable composition may include (a) at least one epoxy resin; (b) a combination of two or more curing agents; (c) at least one core shell rubber toughening agent; and (d) at least one non-reactive diluent. The epoxy resin used as component (a) can be for example D.E.R. 331 and other diglycidyl ethers of bisphenol A and bisphenol F such as those sold by The Dow Chemical Company under the designations D.E.R. 330, D.E.R. 332, D.E.R. 383 and D.E.R. 354 or combinations thereof. The hardeners or curing agents used as component (b) can include an amine curing agent or a combination of amine curing agents; and/or other conventional curing agents. The core shell rubber toughening agent used as component (c) can include dispersions such as sold by The Dow Chemical Company under the designation FORTEGRA 301. The non-reactive diluent used as component (d) can be for example poly alkylene glycols such as polypropylene glycol.

Other components useful in the above curable composition can include a rheology modifier such as for example fumed silica and thixotropes such as talc, asbestos, colloidal silica, modified bentonite, hydrated magnesium aluminum silicates, nanoclays, and the like, and mixtures thereof. Also, the above curable composition can include a supplemental toughening agent such as for example wollastonite filler which is used to reduce the thermal expansion coefficient of the adhesive; and to improve the modulus and mechanical strength. Alternative materials that can be used for the supplemental toughening agent can include for example, calcium carbonate, silica, alumina, glass fibers, glass beads, and the like and mixtures thereof.

The above curable composition can be heat cured, preferably at about 70 °C. The supplemental toughening filler necessary to give the modulus/strength/flexibility balance can be from 3 wt % to 6 wt % of the total composition.

The process of the present invention includes curing the curable resin composition to form a thermoset or cured adhesive composition. The curable epoxy resin adhesive composition of the present invention may be heat cured to form a cured product or thermoset. Generally, the curing of the curable adhesive composition may be carried out at a predetermined temperature and for a predetermined period of time sufficient to cure the curable adhesive composition. Curing the curable adhesive composition may be dependent on the epoxy resins and hardeners used in the curable adhesive composition.

The curing of the curable adhesive composition is generally carried out *via* thermal cure. For example, the temperature of curing the curable adhesive composition may be generally from 40 °C to 200 °C in one embodiment; from 50 °C to 100 °C in another embodiment; and from 70 °C to 90 °C in still another embodiment. Additional curing temperatures may be used for curing the curable adhesive composition of the present invention. For example, the curing temperature can include temperatures within a range of from 10 °C to 150 °C in one embodiment.

The time period of a cure can range from minutes to several hours or days depending on the curing components, the final curable adhesive composition, and/or the particular application intended for the curable adhesive composition. For example in one embodiment, the curable adhesive composition can be cured in one step or in multiple steps. Additionally, in another embodiment, the curable adhesive composition can be post-cured using a different temperature or energy source after an initial cure.

The curing time may be chosen generally between 1 minute to 14 hours in one embodiment, between 5 minutes to 10 hours in another embodiment, and between 10 minutes to 7 hours in still another embodiment. Below a period of time of about 1 minute, the time may be too short to ensure sufficient reaction under conventional processing conditions; and above 14 hours, the time may be too long to be practical or economical.

At substantially complete cure of the curable adhesive composition, generally more than 70 mol % of the thermosetting moieties of the curable adhesive composition have reacted in one embodiment, more than 80 mol % of the thermosetting moieties of the curable adhesive composition have reacted in another embodiment, and more than 90 mol % of the thermosetting moieties of the curable adhesive composition have reacted in still another embodiment.

The thermoset product (i.e. the cross-linked product made from the formulation) of the present invention shows several improved properties over conventional epoxy cured resins. For example, the cured product of the present invention (i.e., the C-staged material) may have a glass transition temperature (Tg) generally from 20 °C to 200 °C in one embodiment; from 30 °C to 150 °C in another embodiment; from 40 °C to 120 °C in yet another embodiment; from 40 °C to 100 °C in still another embodiment; and from 50 °C to 85 °C in one other embodiment. The Tg may be measured using a differential scanning calorimeter by scanning at 10 °C/minute. The Tg is determined by the inflection point of the 2^{nd} order transition.

In still another embodiment, the cured product of the present invention advantageously exhibits improved mechanical properties. For example, the cured adhesive composition, once cured, preferably exhibits an elongation (measured according to ASTM D 638 (2010) to break of at least 5 %. The adhesive composition preferably
has a Young's modulus of at least 3200 MPa as measured according to ASTM D 638. Preferably the Young's modulus is 3200 MPa or greater, more preferably at least 3400 MPa and even more preferably at least 3600 MPa. Preferably, the cured adhesive demonstrates a tensile strength of 50 MPa or greater, more preferably 58 MPa or greater, and most preferably 60 MPa or greater.

The curable compositions of the present invention may be advantageously used as an adhesive composition, and in particular, as an adhesive composition used to bond relatively large structures that include, but are not limited to, aerodynamic wings, wind turbine blades, and automobile components.

As an illustration of one embodiment of a crack resistant epoxy adhesive composition of the present invention, the crack resistant curable composition may include for example the following ingredients in a first part (Component A) including an epoxy resin blend and a second part (Component B) including a hardener blend. The Component A may include (i) an epoxy resin such as D.E.R. 331 commercially available from The Dow Chemical Company; (ii) a core-shell rubber compound such as FORTEGRA 301 commercially available from The Dow Chemical Company; and (iii) a non-reactive diluent such as Polyol P-425 commercially available from The Dow Chemical Company.

The Component B may include (i) a hardener (curing agent) such as Versamid 140 commercially available from Cognis Corporation.

Other ingredients that can be added to either Component A and/or Component B in the adhesive composition illustrated above may include for example a rheology modifying agent such as hydrophilic fumed silica, a supplemental toughening agent such as wollastonite filler, and/or an acrylate compound such as trimethylolpropane triacrylate (TMPTA).

The curable adhesive composition can be applied to a surface of one or between one or more structures to be bonded and then cured. For example, the structures can be composites, fiber reinforced plastics, metal, plastic, fiberglass, or other materials that the curable composition can bond together. The curable composition can be applied manually, by a machine dispensing, spraying, rolling, or other procedures.

In one preferred embodiment, the curable adhesive composition is used in the manufacture of wind turbine blades. Modern wind turbines currently known in the art comprise a plurality of wind turbine rotor blades, typically three blades, each blade having a weight of up to 15 tons and a length of up to 55 meters or longer.

Traditionally, a wind turbine blade consists of two shells which are typically manufactured in separate molds. The wind turbine blade further consists of reinforcing parts such as a spar cap or web stiffeners. A spar is a beam- or box-shaped, tubular, and longitudinal element, and can act as a reinforcing beam running lengthways, i.e. in the longitudinal direction of the blade. The spar is located in the cavity between the two wind turbine shell parts and extends substantially throughout the length of the shell cavity in order to increase the strength and stiffness of the wind turbine blade. A blade may further be reinforced by two or more spars placed lengthways side by side.

The blade parts are typically assembled and bonded together using an adhesive. The reinforcing parts are first installed into one of the half shells using an adhesive. More structural adhesive is then applied along the perimeter rim of the said shell as well as to the top of the reinforcing parts and all exposed bonding edges. The second half shell is then turned over while still in its mold and lowered onto the first half, whereupon the adhesive is allowed to cure, joining the two halves of the blade together.

### EXAMPLES

The following examples and comparative examples further illustrate the present invention in detail but are not to be construed to limit the scope thereof.

The following materials were used in the Examples:
D.E.R.™ 383 (DER 383) is an epoxy compound available from The Dow Chemical Company.

FORTEGRA™ 301 is a core shell rubber compound and commercially available from The Dow Chemical Company.

"BDDGE" stands for 1,4-butanediol diglycidylether and is a reactive diluent available from The Dow Chemical Company.

Polyol P-425 is a polypropylene glycol compound and is a diluent available from The Dow Chemical Company.

Versamid 140 is a polyamidoamine compound and is a curing agent available from Cognis Corporation.

Vestamin IPD is an isophorone diamine compound and is a curing agent available from Evonik Industries.

JEFFAMINE® D-400 is a polyoxypropylenediamine compound and is a curing agent available from Huntsman International LLC.

CAB-O-SIL M5 is a fumed silica compound and is a filler available from Cabot Corporation.

CAB-O-SIL TS720 is a fumed silica compound and is a filler available from Cabot Corporation.

"TMPTA" stands for trimethylolpropane triacrylate and is a polyfunctional acrylate, (acrylate equivalent weight 99 grams/equivalent), available from Aldrich Chemical.

Ancamine K54 is a tris (2,4,6-dimethylaminomethyl)phenol compound and is a tertiary amine catalyst available from Air Products Inc.

OMYACARB 10-AL is a calcium carbonate filler compound available from OMYA.

NYGLOS 8 is a wollastonite filler compound available from NYCO minerals.

The following standard analytical equipments and test methods are used in the Examples:

### Peak Exotherm Temperature

Peak exotherm temperature was determined as follows. 100 grams of Part A and stoichiometric amount of Part B were blended together in a paper cup at 23 °C. A Teflon® coated thermocouple was inserted into the center of the cup contents and the temperature was recorded at regular intervals over a period of 24 hours.

### Glass Transition Temperature

In the examples, the Tg values were measured by differential scanning calorimetry (DSC) on a plaque of the adhesive cured for 7 hours at 70° C. The following method was used:
Tg 1 was obtained using the half extrapolated tangent method for measuring the change in the heat flow curve generated by running the DSC from 10° C to 220° C at 10° C per minute; and Tg 2 was similarly determined after cooling the same sample from 220° C to 20° C followed by a second DSC scan from 10° C to 180° C at 10° C per minute.

### Tensile Testing

Tensile testing was performed on sample specimens and accomplished using an Instron model 4505 Materials Testing System. At least five specimens of each formulation were tested according to ASTM D 638.

### Comparative Examples A and B

The following preparation procedures of the resin and hardener components were carried out in the Examples:

### Preparation of Resin Component - Part A

Formulated epoxy resin components (A1) and (A2) were prepared by blending ingredients as indicated in Table I. The epoxy resin component (A1) includes a blend of an epoxy compound, a core shell rubber toughener, a reactive diluent, and a rheology modifying filler. The epoxy resin component (A2) includes all the above mentioned components and in addition, an acrylate functional monomer for reduction of exotherm. Table I shows the weight percent of each of the various components in the epoxy resin components (A1) and (A2) based on the total weight of the resin component.

**Table I**

| Component | A1 (wt %) | A2 (wt %) |
|---|---|---|
| FORTEGRA 301 | 50.3 | 50.3 |
| Epoxy Compound: DER 383 | 37.5 | 37.5 |
| Diluent: BDDGE | 7.1 | 2.2 |
| TMPTA | 0.0 | 4.9 |
| Filler: Cab-O-Sil TS720 | 5.1 | 5.1 |
| Total | 100 | 100 |

### Preparation of Hardener Components - Part B

Table II shows hardener component formulation (B1). The hardener component (B1) includes a curing agent, and a rheology modifying filler. Table II shows the weight percent of each of the various components comprising the hardener component (B1) based on the total weight of the hardener component.

**Table II**

| Component | B1 (wt %) |
|---|---|
| Curing Agent: Versamid 140 | 52.8 |
| Curing Agent: Vestamin IPD | 23.9 |
| Curing Agent: JEFFAMINE D-400 | 16.3 |
| Fumed silica: Cab-O-Sil M5 | 6.9 |
| Total | 100 |

Comparative Example A was prepared by mixing 100 grams of Resin component (A1) with a stoichiometric amount of hardener component (B1). Comparative Example B was prepared by mixing together 100 grams of Resin component (A2) with a stoichiometric amount of hardener component (B1). Table III shows the peak exotherm temperatures for Comparative Examples A and B. The incorporation of acrylate functional monomer reduced the peak exotherm temperature by 43 %.

**Table III**

| Curable Composition | Peak Exotherm Temperature (°C) |
|---|---|
| Comparative Example A | 63.0 |
| Comparative Example B | 35.6 |

### Examples 1 and Comparative Example C

Table IV shows the weight percent of each of the various components in the curable composition of Example 1 and Comparative Example C based on the total weight of the formulation.

**Table IV**

| Example | Comparative Example C (wt %) | Example 1 (wt %) |
|---|---|---|
| Part A | | |
| FORTEGRA 301 | 32.4 | 31.5 |
| DER 383 | 24.1 | 25.0 |
| Polyol P425 | 0.0 | 2.0 |
| BDDGE | 4.6 | 0.0 |
| TMPTA | 0.0 | 3.1 |
| Cab-O-Sil TS720 | 3.3 | 4.7 |
| OMYACARB 10AL | 3.2 | 0.0 |
| NYGLOS 8 | 0.0 | 2.3 |
| | | |
| PART B | | |
| Versamid 140 | 13.7 | 13.9 |
| Vestamin IPD | 6.2 | 6.3 |
| Jeffamine D 400 | 4.2 | 4.3 |
| Polyol P425 | 0.0 | 1.0 |
| Ancamine K54 | 0.0 | 0.7 |
| Cab-O-Sil M5 | 1.8 | 2.6 |
| OMYACARB 10-AL | 6.5 | 0.0 |
| NYGLOS 8 | 0.0 | 2.6 |

Table V shows the performance properties of Example 1 and Comparative Examples A and C. Comparative Example A was prepared by mixing 100 grams of Resin component (A1) with a stoichiometric amount of hardener component (B1).

**Table V**

| Properties of Cured Adhesive (after curing 7 hours at 70 °C) | Comparative Example A | Comparative Example C | Example 1 |
|---|---|---|---|
| DSC analysis according to method DIN 53765 | | | |
| DSC Tg1 (°C) | 78 | 84 | 83 |
| DSC Tg2 (°C) | 100 | 102 | 87 |
| Tensile test according to method ASTM D 638 | | | |
| Peak Stress (MPa) | 61.7 | 62.2 | 63.7 |
| Modulus (MPa) | 2702 | 3341 | 3654 |
| % Elongation at peak | 5 | 4 | 4.4 |
| % Elongation to break | 8.8 | 6.5 | 5.1 |

Example 1 contains the non-reactive diluent Polyol P425 which is absent in Comparative Examples A and C. The Tg2 of Example 1 is lowered and the ΔTg of Example 1 is only 4 °C compared to a ΔTg of about 20 °C observed for the compositions of Comparative Examples A and C. The inclusion of core shell rubber toughener in Comparative Example A improved the elongation to break by 450 % when compared to a standard commercial epoxy adhesive composition without using a core shell rubber toughener when used in wind blade applications. The use of supplemental toughening filler used in Comparative Example C and in Example 1 increased the modulus of the compositions while still maintaining a > 5 % tensile elongation to break.

## Claims

1. A curable composition comprising (a) at least one epoxy resin; (b) a combination of two or more curing agents; (c) at least one core shell rubber toughening agent; and (d) at least one non-reactive diluent adapted for reducing the difference in temperature between Tg1 and Tg2,
wherein Tg1 is obtained using the half extrapolated tangent method for measuring the change in the heat flow curve generated by a differential scanning calorimetry (DSC) scan from 10 °C to 220 °C at 10 °C per minute, and Tg2 is determined by cooling the same sample from 220 °C to 20 °C followed by a second DSC scan from 10 °C to 180 °C at 10 °C per minute;
and wherein ΔTg (Tg2-Tg1) is less than 15 °C as measured by differential scanning calorimetry (DSC).

2. The curable composition of claim 1, including further a rheology modifying agent, a supplemental toughening agent, an acrylate compound adapted for reducing the peak exotherm temperature of the curable composition, or mixtures thereof.

3. The curable composition of claim 1. wherein the at least one epoxy resin is present in the composition at a concentration of from about 20 weight percent to about 70 weight percent, based on the total weight of the total composition; wherein the stoichiometric ratio of the total epoxy resin to the total curing agent in the composition is from about 1 to about 0.8; wherein the at least one core shell rubber toughening agent is present in the composition at a concentration of from about 1 weight percent to about 15 weight percent, based on the total weight of the total composition; and wherein the at least one non-reactive diluent is present in the composition at a concentration of from about 1 weight percent to about 50 weight percent, based on the total weight of the total composition.

4. The curable composition of claim 1, wherein the at least one non-reactive diluent comprises a polyalkylene glycol.

5. The curable composition of claim 1, wherein components (a) - (d) are separated into two components comprising (I) an epoxy resin composition component; and (II) a hardener composition component.

6. The curable composition of claim 5, wherein the epoxy resin component (I) comprises (A) the at least one epoxy resin, (B) at least one core shell rubber toughening agent, and (C) the at least one non-reactive diluent: and wherein the hardener component (II) comprises (D) the curing agent.

7. The curable composition of claim 1, wherein the curable composition comprises a curable epoxy adhesive composition.

8. A cured product prepared by curing the curable composition of claim 1; wherein the cured product exhibits a balance of thermal and mechanical properties.

9. The cured product of claim 8 having a Tg1 of at least 2 degrees Celsius.

10. The cured product of claim 8 having a modulus of at least about 3200 mPa; measured according to ASTM D 638 and an elongation to break of at least about 5 percent measured according to ASTM D 638 (2010).

11. A process for preparing a curable composition comprising admixing: (a) at least one epoxy resin; (b) a combination of two or more curing agents; (c) at least one core shell rubber toughening agent; and (d) at least one non-reactive diluent adapted for reducing the difference in temperature between Tg1 and Tg2,
wherein Tg1 is obtained using the half extrapolated tangent method for measuring the change in the heat flow curve generated by a differential scanning calorimetry (DSC) scan from 10 °C to 220 °C at 10 °C per minute, and Tg2 is determined by cooling the same sample from 220 °C to 20 °C followed by a second DSC scan from 10 °C to 180 °C at 10 °C per minute;
and wherein ΔTg (Tg2-Tg1) is less than 15 °C as measured by differential scanning calorimetry (DSC).

12. A process for preparing a cured thermoset comprising the steps of:
(I) admixing (a) at least one epoxy resin; (b) a combination of two or more curing agents; (c) at least one core shell rubber toughening agent: and (d) at least one non-reactive diluent adapted for reducing the difference in temperature between Tg1 and Tg2,
wherein Tg1 is obtained using the half extrapolated tangent method for measuring the change in the heat flow curve generated by a differential scanning calorimetry (DSC) scan from 10 °C to 220 °C at 10 °C per minute, and Tg2 is determined by cooling the same sample from 220 °C to 20 °C followed by a second DSC scan from 10 °C to 180 °C at 10 °C per minute;
and wherein ΔTg (Tg2-Tg1) is less than 15 °C as measured by differential scanning calorimetry (DSC); and
(II) heating the admixture of step (1).

13. A cured thermoset article prepared by the process of claim 12.

14. The cured thermoset article of claim 13 comprising a wind turbine blade.

## Patentansprüche

1. Härtbare Zusammensetzung, umfassend (a) wenigstens ein Epoxidharz, (b) eine Kombination von zwei oder mehr Härtern, (c) wenigstens einen Kern-Schale-Kautschuk-Schlagzähmacher und (d) wenigstens ein nicht reaktives Verdünnungsmittel, das zur Verringerung des Temperaturunterschieds zwischen Tg1 und Tg2 geeignet ist,
wobei Tg1 erhalten wird unter Verwendung der Methode des Mittelpunkts extrapolierter Tangenten zur Messung der Änderung in der Wärmeflusskurve, die durch einen Differential-Scanning-Kalorimetrie (DSC)-Scan von 10 °C auf 220 °C bei 10 °C pro Minute erzeugt wurde, und Tg2 bestimmt wird durch Kühlen derselben Probe von 220 °C auf 20 °C, gefolgt von einem zweiten DSC-Scan von 10 °C auf 180 °C bei 10 °C pro Minute,
und wobei ΔTg (Tg2-Tg1) weniger als 15 °C beträgt, gemessen durch Differential-Scanning-Kalorimetrie (DSC).

2. Härtbare Zusammensetzung nach Anspruch 1, weiter umfassend ein Rheologiemodifikationsmittel, einen zusätzlichen Schlagzähmacher, eine Acrylatverbindung, die zur Verringerung der exothermen Peaktemperatur der härtbaren Zusammensetzung geeignet ist, oder Mischungen davon.

3. Härtbare Zusammensetzung nach Anspruch 1, wobei das wenigstens eine Epoxidharz in der Zusammensetzung in einer Konzentration von etwa 20 Gew.-% bis etwa 70 Gew.-% vorhanden ist, bezogen auf das Gesamtgewicht der Gesamtzusammensetzung, wobei das stöchiometrische Verhältnis des gesamten Epoxidharzes zum gesamten Härter in der Zusammensetzung etwa 1 bis etwa 0,8 beträgt, wobei der wenigstens eine Kern-Schale-Kautschuk-Schlagzähmacher in der Zusammensetzung in einer Konzentration von etwa 1 Gew.-% bis etwa 15 Gew.-% vorhanden ist, bezogen auf das Gesamtgewicht der Gesamtzusammensetzung, und wobei das wenigstens eine nicht reaktive Verdünnungsmittel in der Zusammensetzung in einer Konzentration von etwa 1 Gew.-% bis etwa 50 Gew.-% vorhanden ist, bezogen auf das Gesamtgewicht der Gesamtzusammensetzung.

4. Härtbare Zusammensetzung nach Anspruch 1, wobei das wenigstens eine nicht reaktive Verdünnungsmittel ein Polyalkylenglykol umfasst.

5. Härtbare Zusammensetzung nach Anspruch 1, wobei die Komponenten (a) bis (d) in zwei Komponenten getrennt sind, umfassend (I) eine Epoxidharzzusammensetzungs-Komponente und (II) eine Härterzusammensetzungs-Komponente.

6. Härtbare Zusammensetzung nach Anspruch 5, wobei die Epoxidharz-Komponente (I) (A) das wenigstens eine Epoxidharz, (B) wenigstens einen Kern-Schale-Kautschuk-Schlagzähmacher und (C) das wenigstens eine nicht reaktive Verdünnungsmittel umfasst und wobei die Härter-Komponente (II) (D) den Härter umfasst.

7. Härtbare Zusammensetzung nach Anspruch 1, wobei die härtbare Zusammensetzung eine härtbare Epoxidklebemittel-Zusammensetzung umfasst.

8. Ausgehärtetes Produkt, hergestellt durch Aushärten der härtbaren Zusammensetzung nach Anspruch 1, wobei das gehärtete Produkt ein Gleichgewicht von thermischen und mechanischen Eigenschaften aufweist.

9. Ausgehärtetes Produkt nach Anspruch 8 mit einer Tg1 von wenigstens 2 °C.

10. Gehärtetes Produkt nach Anspruch 8 mit einem Modul von wenigstens etwa 3200 mPa, gemessen nach ASTM D 638, und einer Bruchdehnung von wenigstens etwa 5 Prozent, gemessen nach ASTM D 638 (2010).

11. Verfahren zur Herstellung einer härtbaren Zusammensetzung, umfassend das Mischen von (a) wenigstens einem Epoxidharz, (b) einer Kombination von zwei oder mehr Härtern, (c) wenigstens einem Kern-Schale-Kautschuk-Schlagzähmacher und (d) wenigstens einem nicht reaktiven Verdünnungsmittel, das zur Verringerung des Temperaturunterschieds zwischen Tg1 und Tg2 geeignet ist,
wobei Tg1 erhalten wird unter Verwendung der Methode des Mittelpunkts extrapolierter Tangenten zur Messung der Änderung in der Wärmeflusskurve, die durch einen Differential-Scanning-Kalorimetrie (DSC)-Scan von 10 °C auf 220 °C bei 10 °C pro Minute erzeugt wurde, und Tg2 bestimmt wird durch Kühlen derselben Probe von 220 °C auf 20 °C, gefolgt von einem zweiten DSC-Scan von 10 °C auf 180 °C bei 10 °C pro Minute,
und wobei ΔTg (Tg2-Tg1) weniger als 15 °C beträgt, gemessen durch Differential-Scanning-Kalorimetrie (DSC).

12. Verfahren zur Herstellung eines gehärteten Duroplasten, umfassend die Schritte:
(I) Mischen von (a) wenigstens einem Epoxidharz, (b) einer Kombination von zwei oder mehr Härtern, (c) wenigstens einem Kern-Schale-Kautschuk-Schlagzähmacher und (d) wenigstens einem nicht reaktiven Verdünnungsmittel, das zur Verringerung des Temperaturunterschieds zwischen Tg1 und Tg2 geeignet ist,
wobei Tg1 erhalten wird unter Verwendung der Methode des Mittelpunkts extrapolierter Tangenten zur Messung der Änderung in der Wärmeflusskurve, die durch einen Differential-Scanning-Kalorimetrie (DSC)-Scan von 10 °C auf 220 °C bei 10 °C pro Minute erzeugt wurde, und Tg2 bestimmt wird durch Kühlen derselben Probe von 220 °C auf 20 °C, gefolgt von einem zweiten DSC-Scan von 10 °C auf 180 °C bei 10 °C pro Minute,
und wobei ΔTg (Tg2-Tg1) weniger als 15 °C beträgt, gemessen durch Differential-Scanning-Kalorimetrie (DSC), und
(II) Erhitzen der Mischung aus Schritt (I).

13. Ausgehärteter duroplastischer Gegenstand, hergestellt gemäß dem Verfahren nach Anspruch 12.

14. Ausgehärteter duroplastischer Gegenstand nach Anspruch 13, umfassend eine Windturbinenschaufel.

## Revendications

1. Composition durcissable comprenant (a) au moins une résine époxy ; (b) une combinaison d'au moins deux agents de durcissement ; (c) au moins un agent de renforcement caoutchouc cœur-écorce ; et (d) au moins un diluant non réactif adapté pour réduire la différence de température entre Tg1 et Tg2,
dans laquelle Tg1 est obtenue en utilisant le procédé de demi-tangente extrapolée permettant de mesurer le changement de la courbe de fluide thermique générée au moyen d'un balayage calorimétrique différentiel (DSC) allant de 10 °C à 220 °C à 10 °C par minute, et Tg2 est déterminée par le refroidissement du même échantillon allant de 220 °C à 20 °C suivi d'un second balayage DSC allant de 10 °C à 180 °C à 10 °C par minute ;
et dans laquelle ΔTg (Tg2-Tg1) est inférieure à 15 °C telle que mesurée par balayage calorimétrique différentiel (DSC).

2. Composition durcissable selon la revendication 1, comprenant en outre un agent modifiant la rhéologie, un agent de renforcement supplémentaire, un composé acrylate adapté pour réduire la température de crête exothermique de la composition durcissable, des mélanges de ceux-ci.

3. Composition durcissable selon la revendication 1. dans laquelle l'au moins une résine époxy est présente dans la composition à une concentration comprise entre environ 20 % en poids et environ 70 % en poids, en fonction du poids total de la composition totale ; dans laquelle le rapport stœchiométrique de la résine époxy totale à l'agent de durcissement total dans la composition est compris entre environ 1 et environ 0,8 ; dans laquelle l'au moins un agent de renforcement caoutchouc cœur-écorce est présent dans la composition à une concentration comprise entre environ 1 % en poids et environ 15 % en poids, en fonction du poids total de la composition totale ; et dans laquelle l'au moins un diluant non réactif est présent dans la composition à une concentration comprise entre environ 1 % en poids et environ 50 % en poids, en fonction du poids total de la composition totale.

4. Composition durcissable selon la revendication 1, dans laquelle l'au moins un diluant non réactif comprend un polyalkylène glycol.

5. Composition durcissable selon la revendication 1, dans laquelle les composants (a) à (d) sont séparés en deux composant comprenant (I) un composant de composition de résine époxy ; et (II) un composant de composition de durcisseur.

6. Composition durcissable selon la revendication 5, dans laquelle le composant de résine époxy (I) comprend (A) l'au moins une résine époxy, (B) au moins un agent de renforcement caoutchouc cœur-écorce, et (C) l'au moins un diluant non réactif : et dans laquelle le composant de durcisseur (II) comprend (D) l'agent de durcissement.

7. Composition durcissable selon la revendication 1, dans laquelle la composition durcissable comprend une composition adhésive époxy durcissable.

8. Produit durci préparé par le durcissement de la composition durcissable selon la revendication 1 ; dans lequel le produit durcit présente un équilibre entre les propriétés thermiques et mécaniques.

9. Produit durci selon la revendication 8 ayant une Tg1 d'au moins 2 degrés Celsius.

10. Produit durci selon la revendication 8 ayant un module d'au moins environ 3200 mPa ; mesuré conformément à la norme ASTM D 638 et un allongement à la cassure d'au moins environ 5 % mesuré conformément à la norme ASTM D 638 (2010).

11. Procédé de préparation d'une composition durcissable comprenant le mélange :
(a) d'au moins une résine époxy ; (b) d'une combinaison d'au moins deux agents de durcissement ; (c) d'au moins un agent de renforcement caoutchouc cœur-écorce ; et (d) d'au moins un diluant non réactif adapté pour réduire la différence de température entre Tg1 et Tg2,
dans lequel Tg1 est obtenue en utilisant le procédé de la demi-tangente extrapolée permettant de mesurer le changement de la courbe de fluide thermique générée au moyen d'un balayage calorimétrique différentiel (DSC) allant de 10 °C à 220 °C à 10 °C par minute, et Tg2 est déterminée par le refroidissement du même échantillon allant de 220 °C à 20 °C suivi d'un second balayage DSC allant de 10 °C à 180 °C à 10 °C par minute ;
et dans lequel ΔTg (Tg2-Tgl) est inférieure à 15 °C telle que mesurée par balayage calorimétrique différentiel (DSC).

12. Procédé de préparation d'un thermodurcissable durci comprenant les étapes de :
(I) mélange (a) d'au moins une résine époxy ; (b) d'une combinaison d'au moins deux agents de durcissement ; (c) d'au moins un agent de renforcement caoutchouc cœur-écorce : et (d) d'au moins un diluant non réactif adapté pour réduire la différence de température entre Tg1 et Tg2,
dans lequel Tg1 est obtenue en utilisant le procédé de demi-tangente extrapolée permettant de mesurer le changement de la courbe de fluide thermique générée au moyen d'un balayage calorimétrique différentiel (DSC) allant de 10 °C à 220 °C à 10 °C par minute, et Tg2 est déterminée par le refroidissement du même échantillon allant de 220 °C à 20 °C suivi d'un second balayage DSC allant de 10 °C à 180 °C à 10 °C par minute ;
et dans lequel ΔTg (Tg2-Tg1) est inférieure à 15 °C telle que mesurée par balayage calorimétrique différentiel (DSC) ; et
(II) chauffage du mélange de l'étape (1).

13. Article thermodurcissable durcit préparé par le procédé de la revendication 12.

14. Article thermodurcissable durcit selon la revendication 13 comprenant une pale d'éolienne.
